# EUROPEAN PATENT SPECIFICATION

(11) **EP 3 699 400 B1**
(45) Date of publication and mention of the grant of the patent: **17.11.2021**
(21) Application number: 19212453.5
(22) Date of filing: 29.11.2019
(51) Int. Cl.: F01D 11/00, F01D 21/00, F02C 7/28, F16J 15/44

(54) **GAS TURBINE ENGINE SYSTEM WITH LIGHT WEIGHT LOW BLOCKAGE SLIDER SEAL**
GASTURBINENTRIEBWERKSSYSTEM MIT LEICHTGEWICHTIGER SCHIEBERDICHTUNG MIT GERINGER BLOCKIERUNG
SYSTÈME DE MOTEUR À TURBINE À GAZ AVEC JOINT COULISSANT LÉGER À FAIBLE BLOCAGE

(30) Priority: 29.01.2019 US 201916260650
(43) Date of publication of application: 26.08.2020
(73) Proprietor: Raytheon Technologies Corporation, Farmington, CT 06032 (US)
(72) Inventor: COWAN, Curtis C., East Hampton, CT 06424 (US); DUESLER, Paul W., Manchester, CT 06040 (US); THOMAS, Michael R., Bloomfield, CT 06002 (US); MURPHY, Michael Joseph, Windsor, CT 06095 (US)
(74) Representative: Dehns

(56) References cited:
- EP-A1- 1 988 319
- EP-A1- 3 312 389
- EP-A2- 1 947 298
- EP-A2- 2 327 858
- US-A- 3 793 838
- US-A- 5 299 811
- US-A1- 2016 010 503

## Description

### BACKGROUND

This disclosure generally relates to a gas turbine engine with a slider seal assembly.

In an aircraft gas turbine engine, such as a turbofan engine, air is pressurized in a compressor and mixed with fuel in a combustor for generating hot combustion gases. The hot combustion gases flow downstream through turbine stages which extract energy from the gases. In a two spool gas turbine engine, a high pressure turbine powers a high pressure compressor, while a low pressure turbine powers a fan section disposed upstream of the compressor and a low pressure compressor.

Combustion gases are discharged from the turbofan engine through a core exhaust nozzle and fan air is discharged through an annular fan exhaust nozzle defined at least partially by a nacelle surrounding the core engine. A majority of propulsion thrust is provided by the pressurized fan air which is discharged through the fan exhaust nozzle, while the remaining thrust is provided from the combustion gases discharged through the core exhaust nozzle.

The core engine components, including the compressor, the combustor and the turbine, are surrounded by a cylindrical outer casing. A multitude of interface parts, such as borescope plugs, are received within openings of the outer casing and provide access points for inspecting the internal components of the core engine. The interface parts are removable to access the interior of the core engine. For example, fiber optics equipment may be inserted into an opening of the outer casing upon removal of a borescope plug to detect debris, cracking or other damage to the interior components of the gas turbine engine.

Additionally, gas turbines engines may include numerous other interface parts, such as fuel fittings, customer bleed ports and the like. Seal assemblies are required to seal the interface between the interface parts and the openings of the outer casing. That is, the seal assemblies reduce airflow leakage between the interface parts and the outer casing as airflow is communicated within the core engine during engine operation.

The seal assemblies typically include a housing and a metallic seal plate, such as a titanium seal plate. The housing is mounted to the outer casing, the seal plate is affixed adjacent to the housing, and the interface part extends through openings of the seal plate and the housing to provide a seal therebetween. The opening of the seal plate must be machined or drilled at an angle to compensate for the curvature of the outer casing.

Disadvantageously, interface parts may experience heavy wear near the contact area between the interface part and the seal plate due to the metallic nature of the seal plate and the angle at which the interface parts extend through the seal plate. The heavy wear at this contact area may result in airflow leakage between the core airflow passage and the fan bypass airflow passage of the gas turbine engine. Increased wear at the interface between the seal assemblies and the interface parts may be furthered by thermal growth mismatch. This is caused by the severe temperature differences the engine experiences between the core airflow passage and the fan bypass airflow passage, which may cause displacement of the interface parts relative to the seal plates. EP2327858A2, EP1988319A1, US5299811A, US2016/010503A1, EP3312389A1 and US3793838A disclose sealing assemblies and mounting systems of the prior art. EP2327858 A2 discloses a turbojet engine with a slider seal assembly secured to the outer side of the bypass duct case, the slider seal assembly comprising a housing having a recessed opening and a first opening extending through the housing and opening into the recessed opening, a seal plate with a second opening, the seal plate being received within the recessed opening and moveable relative to said housing, and a retaining ring with a plurality of tabs configured to retain said seal plate within the recessed opening.

Accordingly, it is desirable to provide an effective slider seal assembly that reduces wear and reduces flow resistance and airflow leakage between the core airflow passage and the fan bypass airflow passage of a gas turbine engine.

### SUMMARY

In one aspect of the invention, a gas turbine engine system is provided according to claim 1.

In another and alternative embodiment, the receiver comprises a plate or disc attached to the inner wall of the casing of the gas turbine engine.

In another and alternative embodiment, the receiver comprises a machined feature formed into the inner wall of the casing of the gas turbine engine.

In another and alternative embodiment, the retaining ring is received within a slot of the recessed opening and configured to retain the seal plate within the recessed opening.

In another and alternative embodiment, the interface part includes at least one of a borescope plug, a fuel fitting and a customer bleed port.

In another and alternative embodiment, the first opening includes a first diameter and the second opening includes a second diameter, wherein the first diameter is greater than the second diameter.

In another and alternative embodiment, the interface part further comprises a tube fitting coupled to the interface part, the tube fitting configured to provide an interface between the interface part and the seal plate.

In another and alternative embodiment, the gas turbine engine system further comprises a plurality of interface parts extending through an opening in each of the at least one slider seal assembly and the engine casing.

In another and alternative embodiment, one of the plurality of interface parts extends through one of the at least one slider seal assembly.

In another and alternative embodiment, the plurality of the at least one slider seal assembly are mounted along a plurality of locations on the engine casing.

In another and alternative embodiment, the at least one slider seal assembly is mounted on a high pressure side of the engine casing.

In another and alternative embodiment, the at least one slider seal assembly comprises a low aerodynamic profile within the engine casing.

Other details of the slider seal assembly are set forth in the following detailed description and the accompanying drawings wherein like reference numerals depict like elements.

### BRIEF DESCRIPTION OF THE DRAWINGS

FIG. 1 illustrates a general perspective view of a gas turbine engine.
FIG. 2 illustrates a general perspective view of an exemplary slider seal assembly.
FIG. 3 is another view of the exemplary slider seal assembly.
FIG. 4 illustrates a cross-sectional view of the exemplary slider seal assembly illustrated in FIG. 2.
FIG. 5 is a perspective view of the slider seal assembly.
FIG. 6 illustrates a cross-sectional view of a slider seal assembly not covered by the claims having an interface part extending therethrough.
FIG. 7 illustrates a gas turbine engine including multiple slider seal assemblies mounted to an outer engine casing of the gas turbine engine.
FIG. 8 illustrates a cross-sectional view of a gas turbine engine including an example mounting location for a slider seal assembly.

### DETAILED DESCRIPTION

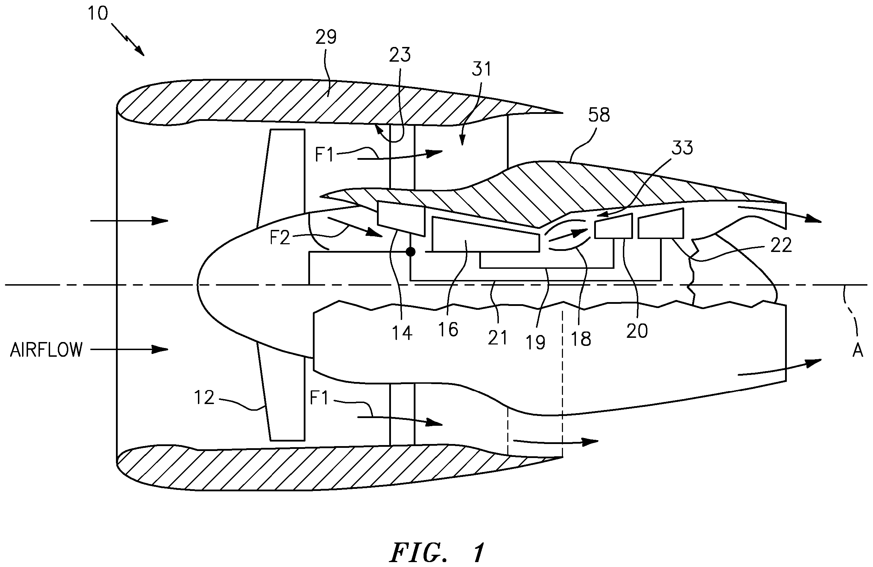

FIG. 1 illustrates a gas turbine engine 10 which includes (in serial flow communication) a fan section 12, a low pressure compressor 14, a high pressure compressor 16, a combustor 18, a high pressure turbine 20, and a low pressure turbine 22. During operation, air is pulled into the gas turbine engine 10 by the fan section 12, pressurized in the compressors 14, 16, and is mixed with fuel and burned in the combustor 18. Hot combustion gases generated within the combustor 18 flow through the high and low pressure turbines 20, 22, which extract energy from the hot combustion gases. In a two spool design, the high pressure turbine 20 powers the high pressure compressor 16 through a high speed shaft 19 and the low pressure turbine 22 powers the fan section 12 and a low pressure compressor 14 through a low speed shaft 21. However, the invention is not limited to the two spool gas turbine architecture described and may be used with other architectures such as a single spool axial design, a three spool axial design and other architectures. That is, the present invention is applicable to any gas turbine engine.

A nacelle 29 is disposed circumferentially about an engine centerline axis A and surrounds the numerous components of the gas turbine engine 10. A fan bypass passage 31 extends between an inner surface 23 of the nacelle 29 and an outer engine casing 58, which houses the compressor sections 14, 16, the combustor 18 and the turbine sections 20, 22. A portion F2 of incoming airflow enters the gas turbine engine 10 and is communicated through a core airflow passage 33, while the remaining portion Fl of incoming airflow is communicated through the fan bypass passage 31 to provide additional thrust for powering the aircraft.

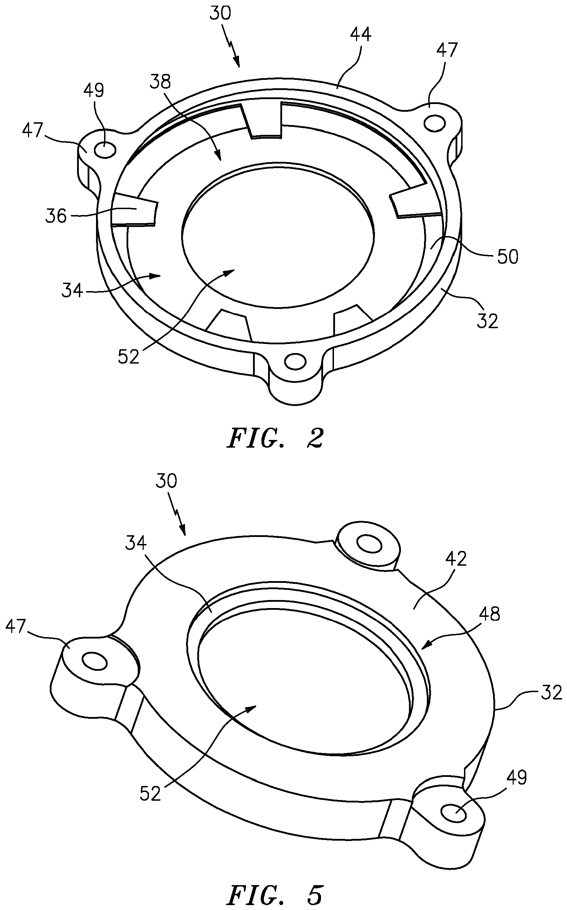

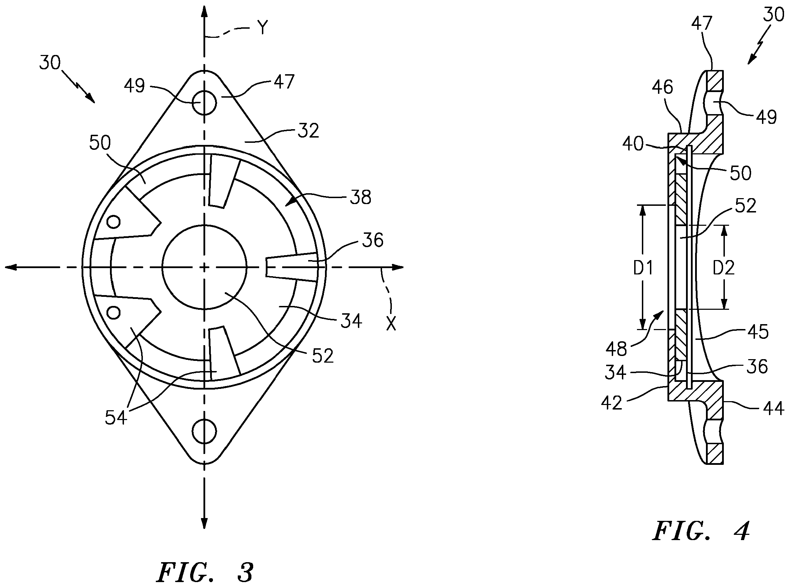

FIGS. 2-5 illustrate an exemplary slider seal assembly 30. The slider seal assembly 30 includes a housing 32, a seal plate 34, and a retaining ring 36. The housing 32 includes a recessed opening 38 for receiving the seal plate 34. The retaining ring 36 is received within a slot 40 (See FIG. 4) of the recessed opening 38 to retain the seal plate 34 within the recessed opening 38.

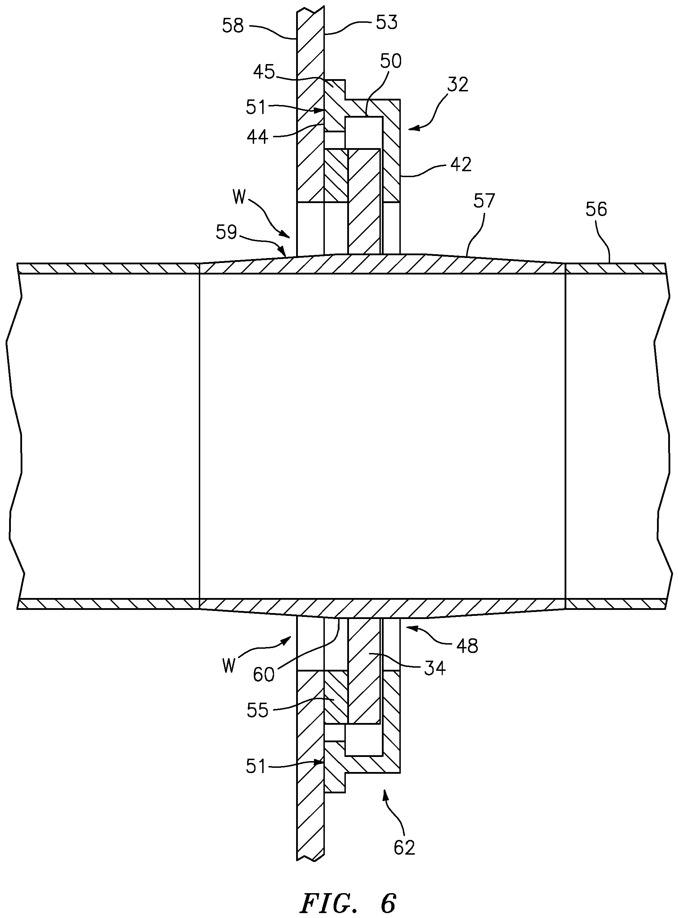

The housing 32 includes an outer surface 42 and an inner surface 44. The recessed opening 38 extends circumferentially from the inner surface 44 in an outward direction towards the outer surface 42. A body portion 46 of the housing 32 generally surrounds the recessed opening 38 and at least partially houses the seal plate 34 within the recessed opening 38. An opening 48 having a diameter D1 extends through the housing 32 and receives an interface part 56, as is further discussed below with respect to FIG. 6. The opening 48 opens into the recessed opening 38. The recessed opening 38 includes a diameter which is larger than the diameter D1.

The inner surface 44 of the housing 32 includes a flat portion 45. The flat portion 45 is configured to match a receiver 51 formed on an inner wall 53 of the casing 58. The receiver 51 can include a flat pad, plate, disc and the like, that is added to the inner diameter of the casing 58. In another exemplary embodiment, the receiver 51 can be machined into inner portion of the duct of the casing 58. It should be understood that the actual dimensions of the flat portion 45 will vary depending upon design specific parameters including, but not limited to, the size of the receiver 51 at the inner wall 53 of the outer engine casing 58.

The housing 32 also includes flanges 47 disposed radially outwardly from the body portion 46. The flanges 47 are disposed near opposite ends of the housing 32 and each include an opening 49 for receiving a fastener to attach the slider seal assemblies 30 to the inner wall of the engine casing 58 of the gas turbine engine 10. Each flange 47 is generally illustrated as triangular is shape, although other shapes are contemplated as would be recognized by a person of ordinary skill in the art having the benefit of this disclosure to attach the slider seal assemblies 30 to the inner wall 53 of the engine casing 58.

The seal plate 34 is received against an inner wall 50 of the recessed opening 38. The inner wall 50 is the inner surface of the outer surface 42 of the housing 32. The seal plate 34 also includes an opening 52. The opening 52 is positioned adjacent the opening 48 of the housing 32 when received within the recessed opening 38, and includes a diameter D2. The diameter D2 of the opening 52 is generally smaller than the diameter D2 of the opening 48. The seal plate 34 slides relative to the housing 32 to compensate for movement of the interface part 56.

The retaining ring 36 includes a plurality of tabs 54. The tabs 54 allow movement of the seal plate 34 in axial directions X and Y relative to the housing 32 while maintaining the seal plate 34 adjacent to the inner wall 50 of the housing 32 (See FIG. 3).

Referring to FIG. 6, the interface part 56 extends from the gas turbine engine 10 through the openings 48, 52 of the housing 32 and seal plate 34 of the slider seal assembly 30. In one example, the interface part 56 is a borescope plug. In another exemplary embodiment, the interface part 56 can include an additional tube fitting 57. The fitting 57 can increase the outer diameter 59 of the interface part 56 to form an interface 60 with the seal plate 34. The gas turbine engine 10 may include multiple borescope plugs. The borescope plugs are removable for inspection of the internal components of the gas turbine engine 10, such as with fiber optics equipment.

For example, the fiber optics equipment may be used to inspect for debris, cracking or other damage to the internal components of the compressor sections 14, 16, the combustor 18, or the turbine sections 20, 22 of the gas turbine engine 10. In another example, the interface part 56 is a fuel fitting. In yet another example, the interface part 56 is a customer bleed port. It should be understood that the interface part 56 may include any part of the gas turbine engine 10 which may experience displacement as a result of thermal growth mismatch.

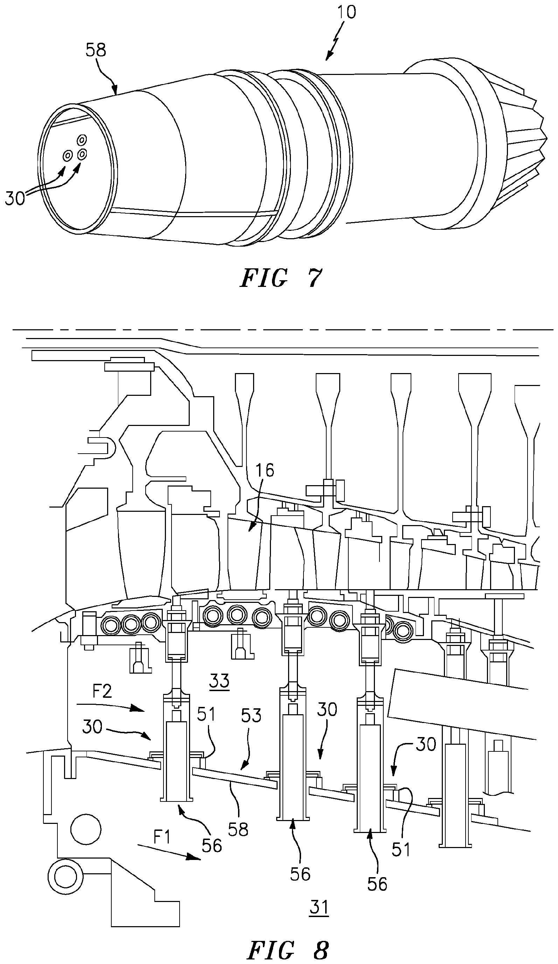

The slider seal assembly 30 seals the gas turbine engine 10 at the interface part 56. A seal is necessitated by providing an opening in the gas turbine engine 10 for receiving the interface part 56. During normal gas turbine engine 10 operation, there is typically a temperature difference between the airflow F2 within the core airflow passage 33 and the airflow Fl within the fan bypass passage 31 (See FIG. 8). The temperature difference may cause thermal growth mismatch between the core airflow passage 33 and the fan bypass passage 31. That is, the gas turbine engine 10 may expand and retract in both the radial and axial directions relative to the engine centerline axis A because of the extreme temperature differences. The thermal growth mismatch may result in displacement of the interface part 56. The slider seal assembly 30 is designed to compensate for the thermal growth mismatch and provide lubrication at wear surfaces W, as the interface part 56 travels during the thermal growth mismatch. The wear surfaces W represent the wear areas that result from the interface parts 56 rubbing against the seal plate 34 and the housing 32 during thermal growth mismatch.

The interface part 56 extends through the opening 48 of the housing 32 in a direction normal to the outer surface 42. Because the seal plate 34 is slideable relative to the housing 32, the interface part 56 extends in a direction normal to the outer surface 42 during engine operation, and maintains the perpendicular positioning during any thermal growth mismatch. That is, the seal plate 34 slides in the axial directions X and Y (See FIG. 3) in response to any expansion/retraction by the gas turbine engine 10. As stated above, the diameter D1 of the opening 48 of the housing 32 is larger than the diameter D2 of the opening 52 of the seal plate 34. Therefore, the interface part 56 has enough clearance space to avoid contact with the housing 32 during displacement caused by thermal growth mismatch. The slider seal assembly 30 therefore reduces rubbing at the wear surfaces W, reduces the amount of corner scraping between the seal plate 34 and the interface part 56, and improves leakage performance of the gas turbine engine 10.

The seal plate 34 can include a fiber reinforced composite. The composite material further reduces contact between the interface part 56 and the wear surfaces W of the seal plate 34 and the housing 32. In one example, the fiber reinforced composite is NR150. In another example, the composite includes PMR15. It should be understood that the seal plate 34 may be comprised of any other composite type material, including any known polyimide composite material.

FIG. 7 illustrates an example gas turbine engine 10 including a plurality of slider seal assemblies 30. The slider seal assemblies 30 are mounted to the inner wall 53 of the engine casing 58 of the gas turbine engine 10. Multiple slider seal assemblies 30 may be mounted adjacent to the compressor sections 14, 16, the combustor 18, the turbine sections 20, 22 or any other section of the gas turbine engine 10. The flat portion 45 of the inner surface 44 of each housing 32 (See FIG. 4) is configured to match the receiver 51 of the inner wall 50 of the engine casing 58. The flat portion 45 of the inner surface 44 provides an improved interface between the slider seal assemblies 30 and the inner wall 50 of engine casing 58, thereby reducing airflow leakage.

FIG. 8 illustrates an exemplary mounting location for the slider seal assemblies 30. In this example, several slider seal assemblies 30 are mounted adjacent to the high pressure compressor 16 of the gas turbine engine. Interface parts 56 extend through the outer engine casing 58, through the openings 52 of each seal plate 34, and through the openings 48 of each housing 32 of each slider seal assembly 30. The interface parts 56 extend in a direction normal to the outer surface 42 of each housing 32. Therefore, during displacement of the interface parts 56 caused by thermal growth mismatch between the core passage 33 and the fan bypass passage 31, the friction load on the interface part 56 is reduced and wear is reduced at the wear surfaces W (See FIG. 5). The slider seal assemblies 30 provide adequate sealing between the interface parts 56 and the gas turbine engine 10, which provides improved efficiency of the gas turbine engine 10.

Another technical advantage to the disclosed slider seal assembly 30 being mounted within the engine casing 58 is that the slider seal 30 comprises a low aerodynamic profile 62 within said engine casing 58. The low aerodynamic profile 62 reduces flow loss within the engine casing 58 for improved fluid flow. The low aerodynamic profile 62 creates a lower flow loss when compared to the prior seal designs as shown in Fig. 1.

The disclosed slider seal 30 also reduces the weight of the engine 10.

There has been provided a slider seal assembly. While the slider seal assembly has been described in the context of specific embodiments thereof, other unforeseen alternatives, modifications, and variations may become apparent to those skilled in the art having read the foregoing description. Accordingly, it is intended to embrace those alternatives, modifications, and variations which fall within the broad scope of the appended claims.

## Claims

1. A gas turbine engine system comprising:
an engine casing (58); and
a compressor (14, 16), a combustor (18) and a turbine (20, 22) housed within said engine casing (58),
the system further comprising:
a receiver (51) formed on an inner wall (53) of said engine casing (58) and configured to adapt a curved surface of said inner wall (53) of the casing (58) into a planar surface; and
at least one slider seal assembly (30) mounted to the receiver (51),
wherein the at least one slider seal assembly comprises:
a housing (32) comprising an outer surface (42) and an inner surface (44), and a recessed opening (38) between said inner surface (44) and said outer surface (42), wherein a first opening (48) extends through the housing (32) and opens into the recessed opening (38), wherein said inner surface (44) of said housing (32) includes a flat portion (45) configured to match the receiver (51) on the inner wall (53) of the engine casing (58);
a seal plate (34) comprising a second opening (52) extending through said seal plate (34), said seal plate (34) being received within said recessed opening (38) and moveable relative to said housing (32); and
a retaining ring (36) configured to retain said seal plate (34) adjacent said housing (32), said retaining ring (36) includes a plurality of tabs (54) configured to retain said seal plate (34) within said recessed opening (38).

2. The gas turbine engine system according to claim 1, wherein said receiver (51) comprises a plate or disc attached to the inner wall (53) of the engine casing (58).

3. The gas turbine engine system according to claim 1 or 2, wherein said receiver (51) comprises a machined feature formed into the inner wall (53) of the engine casing (58).

4. The gas turbine engine system according to any preceding claim, wherein said retaining ring (36) is received within a slot (40) of the recessed opening (38) and configured to retain said seal plate (34) within said recessed opening (38) .

5. The gas turbine engine system according to any preceding claim, wherein said assembly (30) further comprises an interface part (56) extending through said first opening (48) of said housing and said second opening (52) of said seal plate (34).

6. The gas turbine engine system according to claim 5, wherein:
said interface part (56) includes at least one of a borescope plug, a fuel fitting and a customer bleed port; and/or
said interface part (56) further comprises a tube fitting (57) coupled to said interface part (56), said tube fitting (57) configured to provide an interface between said interface part (56) and said seal plate (34).

7. The gas turbine engine system according to any preceding claim, wherein said first opening (48) includes a first diameter (D1) and said second opening (52) includes a second diameter (D2), wherein said first diameter (D1) is greater than said second diameter (D2).

8. The gas turbine engine system of any preceding claim, further comprising:
a plurality of interface parts (56) extending through an opening (52) in each of said at least one slider seal assembly (30) and said engine casing (58).

9. The gas turbine engine system of claim 8, wherein one of said plurality of interface parts (56) extends through one of said at least one slider seal assembly (30).

10. The gas turbine engine system of any preceding claim, wherein a plurality of said at least one slider seal assemblies (30) are mounted along a plurality of locations on said engine casing (58).

11. The gas turbine engine system of any preceding claim, wherein said at least one slider seal assembly (30) is mounted on a high pressure side of said engine casing (58).

12. The gas turbine engine system of any preceding claim, wherein said at least one slider seal assembly (30) comprises a low aerodynamic profile within said engine casing (58).

## Patentansprüche

1. Gasturbinentriebwerkssystem, umfassend:
ein Triebwerksgehäuse (58); und
einen Verdichter (14, 16), einen Verbrenner (18) und eine Turbine (20, 22), welche in dem Triebwerksgehäuse (58) beherbergt ist, wobei das System ferner Folgendes umfasst:
einen Aufnehmer (51), welcher an einer inneren Wand (53) des Triebwerksgehäuses (58) gebildet ist und dazu konfiguriert ist,
eine gekrümmte Fläche der inneren Wand (53) des Gehäuses (58) in eine ebene Fläche einzupassen; und
mindestens eine Gleitdichtungsbaugruppe (30), welche an dem Aufnehmer (51) befestigt ist,
wobei die mindestens eine Gleitdichtungsbaugruppe Folgendes umfasst:
ein Gehäuse (32), welches eine äußere Fläche (42) und eine innere Fläche (44) und eine vertiefte Öffnung (38) zwischen der inneren Fläche (44) und der äußeren Fläche (42) umfasst, wobei sich eine erste Öffnung (48) durch das Gehäuse (32) erstreckt und in die vertiefte Öffnung (38) öffnet, wobei die innere Fläche (44) des Gehäuses (32) einen flachen Teil (45) beinhaltet, welcher dazu konfiguriert ist, zu dem Aufnehmer (51) an der inneren Wand (53) des Triebwerksgehäuses (58) zu passen;
eine Dichtungsplatte (34), welche eine zweite Öffnung (52) umfasst, welche sich durch die Dichtungsplatte (34) erstreckt, wobei die Dichtungsplatte (34) in der vertieften Öffnung (38) aufgenommen ist und bezogen auf das Gehäuse (32) beweglich ist; und
einen Haltering (36), welcher dazu konfiguriert ist, die Dichtungsplatte (34) benachbart zu dem Gehäuse (32) zu halten, wobei der Haltering (36) eine Vielzahl von Lappen (54) beinhaltet, welche dazu konfiguriert sind, die Dichtungsplatte (34) in der vertieften Öffnung (38) zu halten.

2. Gasturbinentriebwerkssystem nach Anspruch 1, wobei der Aufnehmer (51) eine Platte oder Scheibe umfasst, welche an der inneren Wand (53) des Triebwerksgehäuses (58) angebracht ist.

3. Gasturbinentriebwerkssystem nach Anspruch 1 oder 2, wobei der Aufnehmer (51) eine bearbeitetes Merkmal umfasst, welches in die innere Wand (53) des Triebwerksgehäuses (58) gebildet ist.

4. Gasturbinentriebwerkssystem nach einem der vorstehenden Ansprüche, wobei der Haltering (36) in einem Schlitz (40) der vertieften Öffnung (38) aufgenommen ist und dazu konfiguriert ist, die Dichtungsplatte (34) in der vertieften Öffnung (38) zu halten.

5. Gasturbinentriebwerkssystem nach einem der vorstehenden Ansprüche, wobei die Baugruppe (30) ferner ein Schnittstellenteil (56) umfasst, welches sich durch die erste Öffnung (48) des Gehäuses und die zweite Öffnung (52) der Dichtungsplatte (34) erstreckt.

6. Gasturbinentriebwerkssystem nach Anspruch 5, wobei:
das Schnittstellenteil (56) mindestens eines von einem Boroskopstopfen, einem Treibstoffanschlussstück und einem Verbraucherzapfanschluss beinhaltet; und/oder
das Schnittstellenteil (56) ferner ein Rohranschlussstück (57) umfasst, welches mit dem Schnittstellenteil (56) gekoppelt ist, wobei das Rohranschlussstück (57) dazu konfiguriert ist, eine Schnittstelle zwischen dem Schnittstellenteil (56) und der Dichtungsplatte (34) bereitzustellen.

7. Gasturbinentriebwerkssystem nach einem der vorstehenden Ansprüche, wobei die erste Öffnung (48) einen ersten Durchmesser (D1) beinhaltet und die zweite Öffnung (52) einen zweiten Durchmesser (D2) beinhaltet, wobei der erste Durchmesser (D1) größer als der zweite Durchmesser (D2) ist.

8. Gasturbinentriebwerkssystem nach einem der vorstehenden Ansprüche, ferner umfassend:
eine Vielzahl von Schnittstellenteilen (56), welche sich durch eine Öffnung (52) in jedes der mindestens einen Gleitdichtungsbaugruppe (30) und des Triebwerksgehäuses (58) erstreckt.

9. Gasturbinentriebwerkssystem Anspruch 8, wobei sich eines der Vielzahl von Schnittstellenteilen (56) durch eine der mindestens einen Gleitdichtungsbaugruppe (30) erstreckt.

10. Gasturbinentriebwerkssystem nach einem der vorstehenden Ansprüche, wobei eine Vielzahl der mindestens einen Gleitdichtungsbaugruppe (30) entlang einer Vielzahl von Orten an dem Triebwerksgehäuse (58) befestigt ist.

11. Gasturbinentriebwerkssystem nach einem der vorstehenden Ansprüche, wobei die mindestens eine Gleitdichtungsbaugruppe (30) an einer Hochdruckseite des Triebwerksgehäuses (58) befestigt ist.

12. Gasturbinentriebwerkssystem nach einem der vorstehenden Ansprüche, wobei die mindestens eine Gleitdichtungsbaugruppe (30) ein niedriges aerodynamisches Profil in dem Triebwerksgehäuse (58) umfasst.

## Revendications

1. Système de moteur à turbine à gaz comprenant :
un carter de moteur (58) ; et
un compresseur (14, 16), une chambre de combustion (18) et une turbine (20, 22) logés à l'intérieur dudit carter de moteur (58),
le système comprenant en outre :
un receveur (51) formé sur une paroi intérieure (53) dudit carter de moteur (58) et conçu pour adapter une surface incurvée de ladite paroi intérieure (53) du carter (58) dans une surface plane ; et
au moins un ensemble joint coulissant (30) monté sur le receveur (51),
dans lequel l'au moins un ensemble joint coulissant comprend :
un logement (32) comprenant une surface extérieure (42) et une surface intérieure (44), et une ouverture en retrait (38) entre ladite surface intérieure (44) et ladite surface extérieure (42), dans lequel une première ouverture (48) traverse le logement (32) et débouche dans l'ouverture en retrait (38), dans lequel ladite surface intérieure (44) dudit logement (32) comporte une partie plate (45) conçue pour correspondre au receveur (51) sur la paroi intérieure (53) du carter de moteur (58) ;
une plaque d'étanchéité (34) comprenant une seconde ouverture (52) traversant ladite plaque d'étanchéité (34), ladite plaque d'étanchéité (34) étant reçue à l'intérieur de ladite ouverture en retrait (38) et pouvant se déplacer par rapport audit logement (32) ; et
une bague de retenue (36) conçue pour retenir ladite plaque d'étanchéité (34) adjacente audit logement (32), ladite bague de retenue (36) comporte une pluralité de pattes (54) conçues pour retenir ladite plaque d'étanchéité (34) à l'intérieur de ladite ouverture en retrait (38).

2. Système de moteur à turbine à gaz selon la revendication 1, dans lequel ledit receveur (51) comprend une plaque ou un disque fixé à la paroi intérieure (53) du carter de moteur (58).

3. Système de moteur à turbine à gaz selon la revendication 1 ou 2, dans lequel ledit receveur (51) comprend un élément usiné formé dans la paroi intérieure (53) du carter de moteur (58).

4. Système de moteur à turbine à gaz selon une quelconque revendication précédente, dans lequel ladite bague de retenue (36) est reçue à l'intérieur d'une fente (40) de l'ouverture en retrait (38) et conçue pour retenir ladite plaque d'étanchéité (34) à l'intérieur de ladite ouverture en retrait (38).

5. Système de moteur à turbine à gaz selon une quelconque revendication précédente, dans lequel ledit ensemble (30) comprend en outre une partie d'interface (56) traversant ladite première ouverture (48) dudit logement et ladite seconde ouverture (52) de ladite plaque d'étanchéité (34).

6. Système de moteur à turbine à gaz selon la revendication 5, dans lequel :
ladite partie d'interface (56) comporte au moins l'un parmi un bouchon d'endoscope, un raccord de carburant et une prise de prélèvement client ; et/ou
ladite partie d'interface (56) comprend en outre un raccord de tube (57) couplé à ladite partie d'interface (56), ledit raccord de tube (57) étant conçu pour fournir une interface entre ladite partie d'interface (56) et ladite plaque d'étanchéité (34).

7. Système de moteur à turbine à gaz selon une quelconque revendication précédente, dans lequel ladite première ouverture (48) comporte un premier diamètre (D1) et ladite seconde ouverture (52) comporte un second diamètre (D2), dans lequel ledit premier diamètre (D1) est supérieur audit second diamètre (D2) .

8. Système de moteur à turbine à gaz selon une quelconque revendication précédente, comprenant en outre :
une pluralité de parties d'interface (56) traversant une ouverture (52) dans chacun parmi ledit au moins un ensemble joint coulissant (30) et ledit carter de moteur (58).

9. Système de moteur à turbine à gaz selon la revendication 8, dans lequel l'une parmi ladite pluralité de parties d'interface (56) traverse l'un parmi ledit au moins un ensemble joint coulissant (30).

10. Système de moteur à turbine à gaz selon une quelconque revendication précédente, dans lequel une pluralité dudit au moins un ensemble joint coulissant (30) sont montés le long d'une pluralité d'emplacements sur ledit carter de moteur (58).

11. Système de moteur à turbine à gaz selon une quelconque revendication précédente, dans lequel ledit au moins un ensemble joint d'étanchéité (30) est monté sur un côté haute pression dudit carter de moteur (58).

12. Système de moteur à turbine à gaz selon une quelconque revendication précédente, dans lequel ledit au moins un ensemble joint coulissant (30) comprend un profil aérodynamique bas à l'intérieur dudit carter de moteur (58).
